**Europäisches Patentamt**

**European Patent Office**

**Office européen des brevets**

(19)

(11) Veröffentlichungsnummer: **0 070 352**
A2

## (12) EUROPÄISCHE PATENTANMELDUNG

(21) Anmeldenummer: **82101934.6**

(22) Anmeldetag: **11.03.82**

(51) Int. Cl.³: **B 23 D 47/00**

(30) Priorität: **16.07.81 DE 3128087**

(43) Veröffentlichungstag der Anmeldung: **26.01.83**
Patentblatt 83/4

(84) Benannte Vertragsstaaten: **AT BE CH DE FR GB IT LI NL SE**

(71) Anmelder: **Heinz Kupfer GmbH & Co., Im Valtert 2, D-6951 Obrigheim (DE)**

(72) Erfinder: **Kupfer, Karlheinz, Im Bernhardsgrund 22, D-6951 Obrigheim (DE)**
Erfinder: **Keller, Wolfgang, Flurstrasse 16, D-6950 Mosbach-Diedeshelm (DE)**

(74) Vertreter: **Hach, Hans Karl, Dr., Tarunstrasse 23, D-6950 Mosbach-Waldstadt (DE)**

(54) **Zerkleinerungsvorrichtung.**

(57) Zerkleinerungsvorrichtung. Bei einer Trennvorrichtung 4 wird durch entsprechende Orientierung der Schnittführung der Abrieb schräg nach unten versprüht und dort im Wasserbad einer nach oben offenen Wasserwanne 25 aufgefangen.

# ZERKLEINERUNGSVORRICHTUNG

Die Erfindung betrifft eine Zerkleinerungsvorrichtung für Werkstücke aus Metall, Beton und dergleichen, harten Materialien zum Trennen mit Hilfe einer umlaufenden Trennscheibe einer motorbetriebenen Trennvorrichtung, bei der an einem Gestell eine Werkstückaufnahme angeordnet ist und darüber eine sich mit ihrer Vorschubachse in Trennschnittrichtung erstreckende Vorschubführung für einen Support gelagert ist und bei der die Trennvorrichtung in einer Nachführung für die Schnittiefe am Support gelagert ist, die mit ihrer Nachführachse gekreuzt zur Vorschubachse orientiert ist.

Bei einer bekannten Vorrichtung dieser Art wird der beim Trennen anfallende Abrieb zusammen mit Kühlwasser in die Umgebung verspritzt. Aus diesem Grunde ist diese bekannte Vorrichtung nicht geeignet für Anwendungsfälle, bei denen die unkontrollierte Verteilung von Abrieb und Flüssigkeit an die Umgebung vermieden werden muß, wie es zum Beispiel beim Zertrennen von radioaktiv verseuchten oder möglicherweise radioaktiv verseuchten Werkstücken der Fall ist.

Aufgabe der Erfindung ist es, eine Vorrichtung der eingangs genannten Art so auszugestalten, daß bei möglichst einfachem Aufwand und auch unter möglichst weitgehender Vermeidung von Erschwernissen bei der Bedienung unkontrollierbare Belastungen der Umgebung mit umherspritzenden Materialien und umherspritzender Flüssigkeit vermieden werden.

Die Erfindung ist dadurch gekennzeichnet, daß beim Trennen die Vorschubachse im Neigungswinkel von 30 bis 60°, vorzugsweise von 45°, gegenüber der horizontalen Standfläche des Gestells geneigt ist,

daß die Trennscheibe im Trennschnitt abwärts umlaufend angetrieben ist und

daß unterhalb der Bahn der Trennscheibe in abwärtiger Verlängerung des Trennschnittes eine Wasserwanne am Gestell angeordnet ist, die nach oben offen ist.

Durch die gewählte Schräglage wird der Abrieb mit der Flüssigkeit in tangentialer Verlängerung des jeweils trennenden Umfangsabschnittes der Trennscheibe schräg nach unten gesprüht und kann dort sicher und ohne großen Aufwand von der Wasserfüllung der Wasserwanne aufgefangen werden.

Wenn die Trennscheibe das Werkstück vollständig durchsetzt, fällt Schleifstaub entlang des Schnittes unterhalb des Werkstückes an. Dieser Schleifstaub wird sofort eingefangen und niedergeschlagen bei einer Weiterbildung, die dadurch gekennzeichnet ist, daß unterhalb der Bahn der trennenden Trennscheibe eine nach oben offene, auf die Wasserwanne zu geneigte Rinne angeordnet ist, in deren oberes, der Wasserwanne abgekehrtes Ende ein Wasserzulauf mündet.

Da es sich nicht mit absoluter Sicherheit ausschließen läßt, daß trotz der getroffenen Vorkehrungen noch einzelne Staubpartikelchen umherschwirren, ist es zweckmäßig, wenn das Gestell von einem staubdichten Käfig umschlossen ist, der eine sich beidseitig von der Werkstückaufnahme und oberhalb der Werkstückaufnahme erstreckende, durch eine Schiebehaube verschließbare Öffnung und einen Staubabzug aufweist.

Staubdicht heißt in diesem Zusammenhang nicht luftdicht, es genügt ein solcher Luftabschluß, bei dem Luft und damit Staub nicht unkontrolliert aus dem Käfig austreten kann. Durch den vorgesehenen Abzug wird im Inneren des Käfigs ein Unterdruck aufrechterhalten, der verhindert, daß durch Undichtigkeiten des Käfigs Luft oder Staub unkontrolliert nach außen treten kann.

Es empfiehlt sich für die Wasserwanne einen Wasserzulauf und einen Wasserüberlauf vorzusehen. Dann kann leicht sichergestellt werden, daß in der Wasserwanne immer ein vorbestimmter Wasserspiegel herrscht, in dem der beim Schleifen direkt in die Wasserwanne gespritzte und auch der von der Rinne zugeführte Staub niedergeschlagen werden kann. Man kann das Wasser aus der Wasserwanne mitsamt dem Staub ständig abziehen und erneuern, man kann das Wasser auch rezirkulieren, indem man es vom Schleifstaub befreit und dekontaminiert und außerdem zweckmäßig kühlt, weil es sich aufheizt und in der Rinne auch Kühlfunktion für den Trennvorgang übernehmen kann.

Die Nachführachse kann vertikal oder horizontal stehen, es sind auch Zwischenstellungen möglich. Vorzugsweise steht die Nachführachse auf der Vorschubachse senkrecht und bildet mit dieser eine, bezogen auf die horizontale Standfläche des Gestells, vertikal orientierte Führungsebene für die Mittelebene der Trennscheibe. Man kann dann die Vorschubführung und die Nachführung, soweit es die gegenseitige Achsorientierung angeht, in bekannter Weise ausbilden und muß sie nur insgesamt mit der angestrebten Neigung innerhalb des Gestells anordnen, so daß man bei dieser Weiterbildung weitgehend auf bekannte Konstruktionselemente zurückgreifen kann.

Der Schräglage des Trennschnittes entsprechend wird zweckmäßig auch die Werkstückaufnahme orientiert, indem diese einen Werktisch aufweist, der sich mit der gleichen Neigung wie die Vorschubachse schräg zur Standfläche erstreckt.

Bei den zu zerkleinernden Werkstücken handelt es sich auch um sehr schwere Werkstücke aus Beton, Metall und/oder dergleichen, die, wenn sie auf der Werkstückaufnahme liegen und gegen Verrutschen gesichert sind, durch Schwerkraft hinreichend für den Trennvorgang fixiert sind, so daß man keine zusätzlichen Halteklammern oder dergleichen benötigt. Für solche Werkstücke ist eine Stütze am abwärtigen Ende der Werkstückaufnahme für ein auf der Werkstückaufnahme abschüssig liegendes Werkstück vorgesehen. Ein aufliegendes Werkstück wird dann an die Stütze herangerückt und liegt damit, bedingt durch Schwerkraft, fest. Beim Trennen wird es, bedingt durch die vorgesehene Drehrichtung der Trennscheibe, wenn überhaupt, dann in abwärtige Richtung gedrängt, so daß es beim Trennvorgang die gesicherte Stellung, anliegend an dieser Stütze, verlassen kann. Dabei empfiehlt es sich, daß die Stütze in Verlängerung des Trennschnittes einen Schlitz für den Eintritt der Trennscheibe aufweist.

In vielen Fällen ist es wünschenswert, das Werkstück mit gekreuzten Trennschnitten zu zerlegen. Dazu dient eine Aufnahmeplatte, die sich mit der Neigung der Vorschubachse schräg zur Standfläche erstreckt, die drehbar um eine senkrecht zum Werktisch gelegene Aufnahmeachse an der Werkstückaufnahme gelagert ist, die ringsherum einen als Stütze dienen Stützrand aufweist, der mehrere verschiedenen Drehstellungen der Aufnahmeplatte entsprechende Schlitze für den Eintritt der Trennscheibe aufweist. Man kann dann, nachdem ein Trennschnitt vollzogen ist, durch Drehen der Aufnahmeplatte das Werkstück in eine neue Lage bringen, in der ein weiterer Trennschnitt vollzogen wird, wobei dann die Trennscheibe in einem anderen Schlitz des Stützrandes Platz findet.

Unter dem gleichen Gesichtspunkt empfiehlt sich eine Weiterbildung, die dadurch gekennzeichnet ist, daß die Werkstückaufnahme in zwei Gleitschienen verschieblich und arretierbar gelagert ist, welche Gleitschienen sich senkrecht zur Führungsebene erstreckend, parallel nebeneinander in einer Gleitebene angeordnet sind, die sich mit der Neigung der Vorschubachse schräg zur Standfläche erstreckt.

Verschiebt man die Werkstückaufnahme, nachdem ein Trennschnitt durchgeführt ist, dann verschiebt sich das Werkstück und gerät in eine neue Schnittstellung. Auf den Gleitschienen kann man die Werkstückaufnahme mitsamt dem Werkstück auch aus dem Bereich unterhalb der Trennvorrichtung herausziehen, wodurch die Werkstückaufnahme zum Entladen oder Neubeschicken leicht zugänglich wird.

Es genügt in vielen Anwendungsfällen, die Öffnung der Wasserwanne so weit auszugestalten, daß der abspritzende Abrieb sicher eingefangen wird. Da es in manchen Fällen aber nicht ganz ausgeschlossen ist, daß Wasser bei Betrieb vom Werkstück beziehungsweise der Werkstückaufnahme abtropft, empfiehlt es sich, die Wasserwanne so auszugestalten, daß deren Öffnung sich über den ganzen Grundriß der Vorschubführung und der in Trennstellung befindlichen Werkstückaufnahme erstreckt.

Die Erfindung wird nun anhand der beigefügten Zeichnung näher erläutert.

In der Zeichnung zeigt:

Figur 1          eine Zerkleinerungsvorrichtung nach der Erfindung im abgebrochenen Teilschnitt,

Figur 2          die Ansicht gemäß dem Pfeil II aus Figur 1,

Figur 3          ein anderes Ausführungsbeispiel einer Zerkleinerungsvorrichtung im Querschnitt III gemäß Figur 4,

Figur 4          den Horizontalschnitt IV aus Figur 3,

Figur 5          die Vorrichtung im Schnitt entsprechend Figur 3, jedoch bei hochgeklappter Trennvorrichtung und geöffneter Schiebehaube, und

Figur 6          im Blockdiagramm eine Einrichtung zur Wiederaufbereitung des Staubwassers.

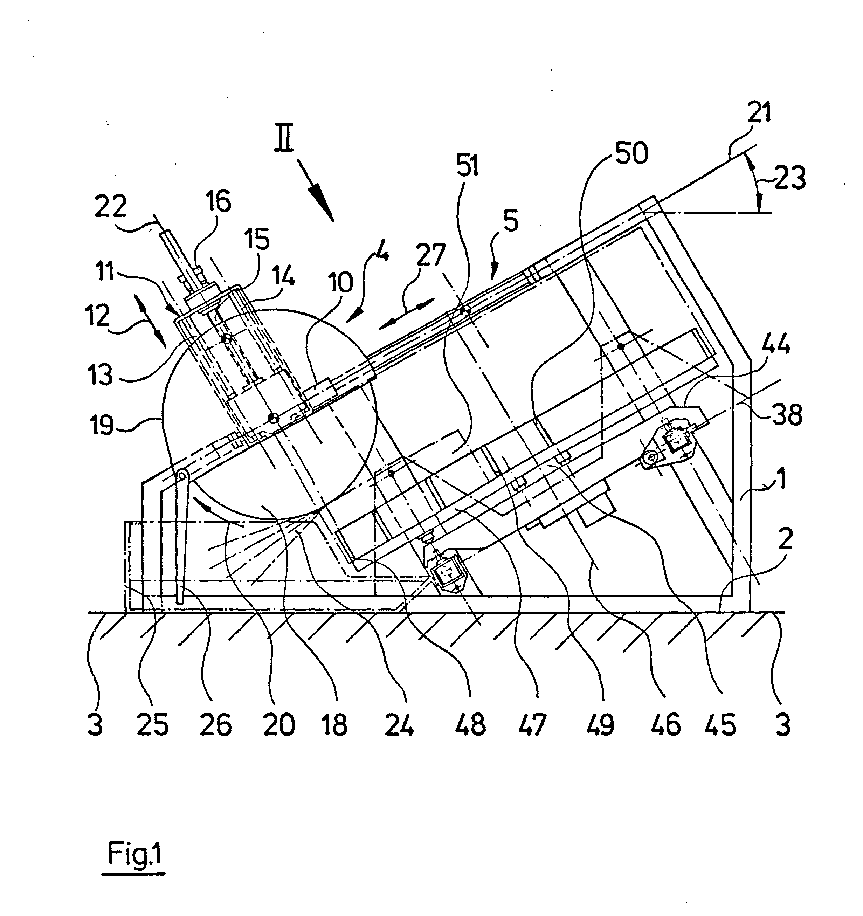

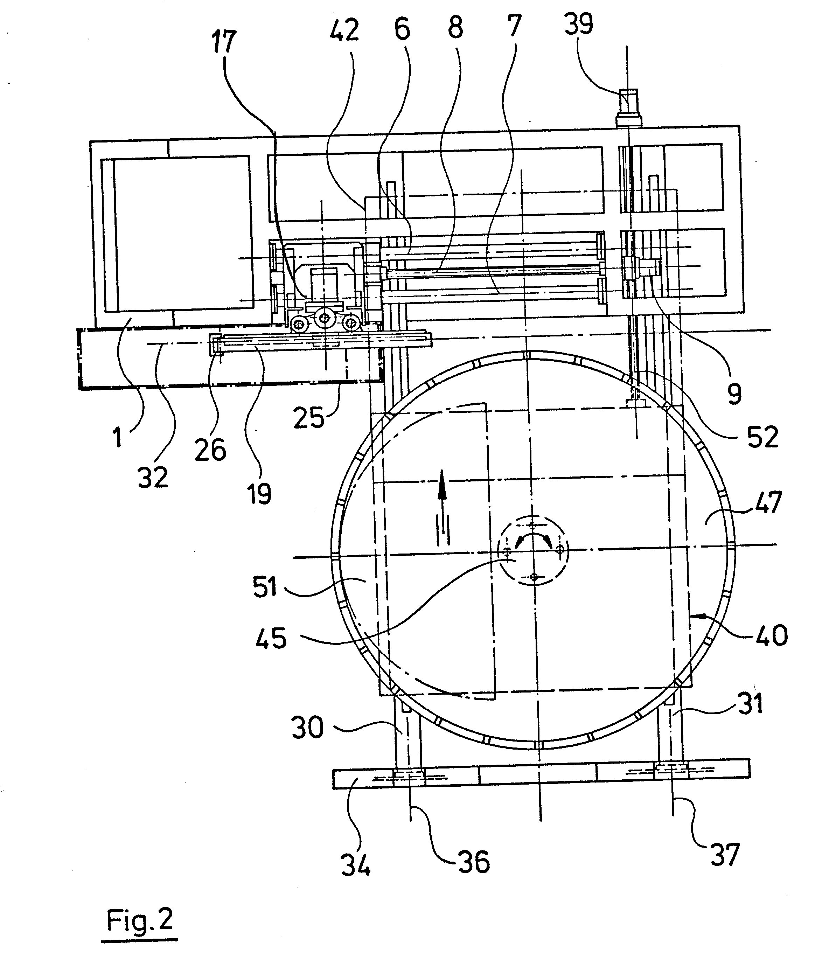

In Figur 1 und 2 ist mit 1 ein Gestell bezeichnet, das mit horizontaler Standfläche 2 auf einem horizontalen Boden 3 abgestellt ist. An dem Gestell 1 ist eine motorbetriebene Trennvorrichtung 4 in einer Vorschubführung 5 in Richtung des Doppelpfeils 27 hin- und herschiebbar gelagert. Die Vorschubführung 5 besteht aus zwei zueinander achsparallelen Gleitstangen 6 und 7 und einer dazu achsparallelen Antriebsspindel 8, die drehbar gelagert ist und von einem Antriebsmotor 9 angetrieben werden kann. Die Antriebsspindel 8 ist in ein Gewindeloch eines Supportes 10 verschraubt, an dem die Trennvorrichtung 4 mit einer Nachführung 11 in Richtung des Doppelpfeils 12 hin- und herbeweglich gelagert ist. Die Nachführung 11 besteht aus zwei zueinander koaxialen Gleitschienen 13, 14 und einer dazu koaxialen Gewindespindel 15, die von einem Antriebsmotor 16 um ihre Achse umlaufend antreibbar ist und in ein Gewindeloch des Gehäuses eines Antriebsmotors 17 geschraubt ist.

Die Trennvorrichtung 4 weist eine auf den Abtriebswellenstumpf des Antriebsmotors 17 gesteckte Trennscheibe 18 auf, die schräg nach oben durch eine Schutzhülle 19 abgedeckt ist und schräg nach unten freiliegt. Die Trennscheibe 18 wird in Pfeilrichtung 20 umlaufend angetrieben und kann durch die Vorschubführung 5 in Richtung der Vorschubachse 21 entlang des angestrebten Trennschnittes geführt werden und durch die Nachführung 11 in Richtung der Nachführachse 22 in der Schnittiefe nachgeführt werden. Die beiden Achsen 21, 22 stehen senkrecht aufeinander und spannen eine Parallelebene zur Führungsebene 32 auf, die sich in der Mittelebene der Trennscheibe 18 erstreckt, also parallel zur Zeichenebene der Figur 1.

Bemerkenswert und für die Erfindung wesentlich ist die Tatsache, daß die Vorschubachse 21 im Winkel 23 von 45° gegenüber der Standfläche 2 geneigt ist, so daß der beim Trennen anfallende Abrieb etwa in dem strichpunktiert eingezeichneten Abriegkegel 24 schräg nach unten spritzt. Der Winkel 23 kann auch eine andere Größe haben. Alle Winkel im Bereich zwischen 30 und 60° sind geeignet, ein Winkel von 45° ± 5° ist bevorzugt.

Der Abrieb wird von einer am Fuß des Gestells 1 angeordneten, nach oben offenen Wasserwanne 25 aufgefangen, die sich in abwärtiger Verlängerung des Trennschnittes beziehungsweise des Abriebkegels unterhalb der Bahn der Trennscheibe 18 mit Toleranz nach allen Seiten erstreckt. Der Rand der Wasserwanne 25 ist am rechts gezeichneten Teil höher, um zu vermeiden, daß dort Abrieb über den Rand spritzt. Dem gleichen Zweck dient auch eine gelenkig um eine Achse senkrecht zur Zeichenebene der Figur 1 an der Schutzhülle 19 gelagerte, nach unten weisende Zunge 26, die sich über die ganze Breite der Wanne erstreckt und in diese eintaucht.

Unterhalb der Nachführung 11 erstrecken sich senkrecht zur Führungsebene 32 zwei Gleitschienen 30, 31, die mit einem stirnseitigen Abschlußteil 34 einen Ausleger des Gestells bilden. Die Achsen 36, 37 der Gleitschienen definieren eine Gleitebene 38, die sich senkrecht zur Führungsebene 32 erstreckt und schräg zur Standfläche 2 geneigt ist, und zwar mit dem gleichen Winkel 23 wie die Vorschubachse 21.

Auf diesen Gleitschienen ist nach Art einer Schlittenführung eine Werkstückaufnahme 40 verschieblich. Zum Verschieben der Werkstückaufnahme dient eine durch einen Motor 39 antreibbare Gewindespindel 52, die in ein Gewindeloch der Werkstückaufnahme eingeschraubt ist.

Die Werkstückaufnahme 40 kann in eine in Figur 1 durch die strichpunktierte Linie 42 umrissene Funktionsstellung verfahren werden, in der sie sich unterhalb des Wirkungsbereichs der Trennscheibe 18 befindet, und von da in eine ausgerückte Be- und Entladestellung, in der sie in Figur 2 ausgezogen gezeichnet ist. Im Bereich der Funktionsstellung kann die Werkstückaufnahme 40 in kleinen Schritten verschoben werden entsprechend seitlich versetzt angestrebten Trennschnitten.

Die Oberseite der Werkstückaufnahme 40 ist als Werktisch 44 ausgebildet, der entsprechend wie die Gleitebene 38 schräg geneigt ist. Auf dem Werktisch kann mit Hilfe nicht dargestellter Klammern ein Werkstück befestigt werden, das getrennt werden soll.

Im dargestellten Ausführungsbeispiel ist auf dem Werktisch in einem Drehlager 45 eine um die Aufnahmeachse 46 drehbar gelagerte Aufnahmeplatte 47 gelagert, die ringsherum einen nach oben weisenden Stützrand 48 aufweist. Der Stützrand 48 weist auf dem Umfang verteilt Schlitze 49, 50 auf. Bei Betrieb wird die Aufnahmeplatte 47 so gedreht, daß einer der Schlitze 49 mit der Trennscheibe 18 fluchtet. Die Schlitze sind sämtlichst so breit, daß die Trennscheibe bequem hineinpaßt.

Ein zu trennendes Werkstück 51 wird auf der abschüssigen Aufnahmeplatte bis zum Anschlag an den Stützrand 48 nach unten geschoben. In dieser Stellung ist es durch sein Gewicht hinreichend festgehalten. Das Werkstück wird dann, beginnend bezogen auf Figur 1 oben rechts, nach links unten von der Trennscheibe überfahren. Das wird wiederholt, bis das Werkstück durchgeschnitten ist. Dabei taucht die Trennscheibe in den am untersten Punkt der Aufnahmeplatte gelegenen Schlitz ein.

_9_

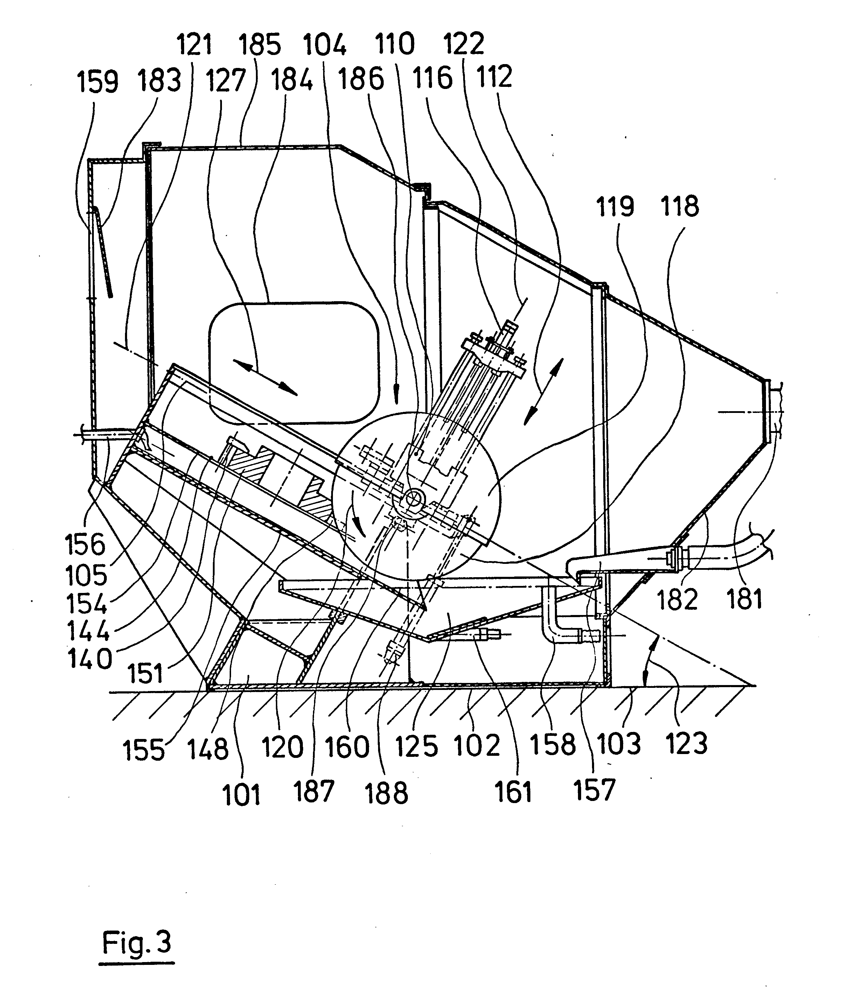

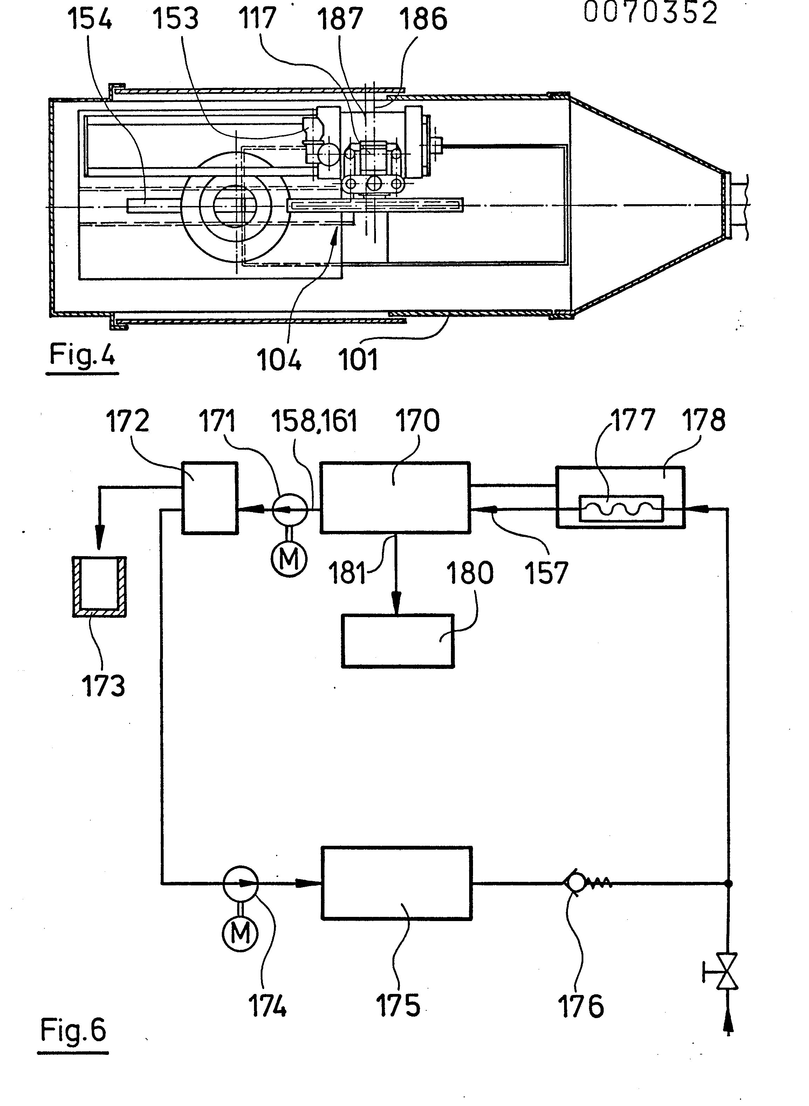

In Figur 3 bis 5 ist mit 101 ein Gestell bezeichnet, das mit horizontaler Standfläche 102 auf einem horizontalen Boden 103 abgestellt ist. An dem Gestell 101 ist eine motorbetriebene Trennvorrichtung 104 in einer Vorschubführung 105 in Richtung des Doppelpfeils 127 hin- und herschiebbar gelagert. Mit 110 ist ein Support der Trennvorrichtung 104 bezeichnet, der in einer Nachführung 111 in Richtung des Doppelpfeils 112 entlang der Nachführachse 122 hin- und herbeweglich gelagert ist. Zum Verschieben der Trennvorrichtung entlang der Vorschubführung 105 dient der Antriebsmotor 116 und zum Verschieben entlang der Nachführung der Antriebsmotor 153.

Von einem Antriebsmotor 117 wird die Trennscheibe 118, die oben durch eine Schutzhülle 119 abgedeckt ist, in Pfeilrichtung 120 umlaufend angetrieben. Auch bei diesem Ausführungsbeispiel erstreckt sich die Vorschubachse 121 im spitzen Winkel 123 von etwa 45° gegenüber der Standfläche 102, so daß der beim Trennen anfallende Abrieb in die am Fuß des Gestells 101 angeordnete, offene Wasserwanne 125 gespritzt wird. Mit 140 ist eine Werkstückaufnahme bezeichnet, mit der auf einem Werktisch 144 ein Werkstück 151, das zertrennt werden soll, gelagert werden kann. Der Werktisch 144 weist einen Schlitz 154 auf, in den die Trennscheibe 118 paßt. Entlang dieses Schlitzes, also entlang der Bahn der Trennscheibe, ist unterhalb der Werkstückaufnahme 140 eine nach oben offene Rinne 155 angeordnet, die zur Wasserwanne 125 geneigt ist und in diese mündet, und an deren oberem, der Wasserwanne 125 abgekehrten Ende ein von außen gespeister Wasserzulauf 156 mündet. Auch in die Wasserwanne 125 mündet ein von außen gespeister Wasserzulauf 157. Für die Wasserwanne ist außerdem ein nach außen führender Überlauf 158 vorgesehen.

Bei Betrieb ist die Wasserwanne 125 bis zu dem durch den Überlauf 158 bestimmten Wasserspiegel 160 gefüllt und es strömt ständig Wasser die Rinne 155 entlang in die Wasserwanne. Das Wasser in der Rinne 155 schlägt den dort anfallenden Schleifstaub nieder. Abspritzender Schleifstaub wird in der Wasserfüllung der Wasserwanne 125 aufgefangen, so daß schließlich sämtlicher Schleifstaub in der Wasserwanne 125 niedergeschlagen wird. Durch einen am Boden der Wasserwanne 125 angebrachten, nach außen führenden Entleerungsstutzen 161 kann der sich dort bildende Schleifstaubsumpf abgezogen werden.

Man kann für den Schleifstaubniederschlag ständig neues Wasser zuführen und das abgezogene Wasser verwerfen. Wenn radioaktiv verseuchte Werkstücke getrennt werden, ist auch das Waschwasser radioaktiv verseucht und muß dekontaminiert werden. Das kann dann in der an solchen Arbeitsbereichen im allgemeinen zur Verfügung stehenden Dekontaminiereinrichtung geschehen. Alternativ kann man aber auch das verbrauchte Wasser rezirkulieren, beispielsweise wie in Figur 6 angegeben.

In Figur 6 ist mit 170 die Trennvorrichtung aus Figur 3 bis 5 bezeichnet, von der das am Überlauf 158 und dem Stutzen 161 abgezogene Wasser über eine Hebepumpe 171 an eine Wasseraufbereitungsanlage 172 gelangt. Dort werden die Feststoffe abgeschieden und gelangen in einen Auffangbehälter 173. Über eine Hebepumpe 174 gelangt das aufbereitete Wasser über eine Filteranlage 175 und ein Rückschlagventil 176 an eine Kühlvorrichtung 177 und von da über den Wasserzulauf 156 und 157 an die Trennvorrichtung 170.

Die Kühlvorrichtung 177 kann der Ölkühler einer Hydraulikanlage 178 sein, die dazu dient, die als hydraulische Kraftaggregate ausgebildeten Motoren und Hebezeuge der Trennvorrichtung mit Drucköl zu versorgen.

Mit 180 ist eine Abluftanlage mit Abluftfilter bezeichnet, die an einen Abzug 181 der Trennvorrichtung angeschlossen ist.

Zur weiteren Abschirmung der Umgebung vor vagabundierenden Staubteilchen ist das Gestell 101 in einem staubdichten Käfig 182 untergebracht, von dem der erwähnte Abzug 181 ausgeht. Dem Abzug 181 gegenüber ist in der Käfigwand eine Öffnung 159 mit einer durch Schwerkraft belasteten Zuluftklappe 183, durch die in Verbindung mit dem Abzug 181 sichergestellt werden kann, daß innerhalb des Käfigs 182 ein Unterdruck von etwa 3 bis 15 milli-

bar aufrechterhalten werden kann. Auf diese Weise ist sichergestellt, daß durch Undichtigkeiten des Käfigs keine Luft und
damit auch kein Staub unkontrolliert nach außen dringen kann.

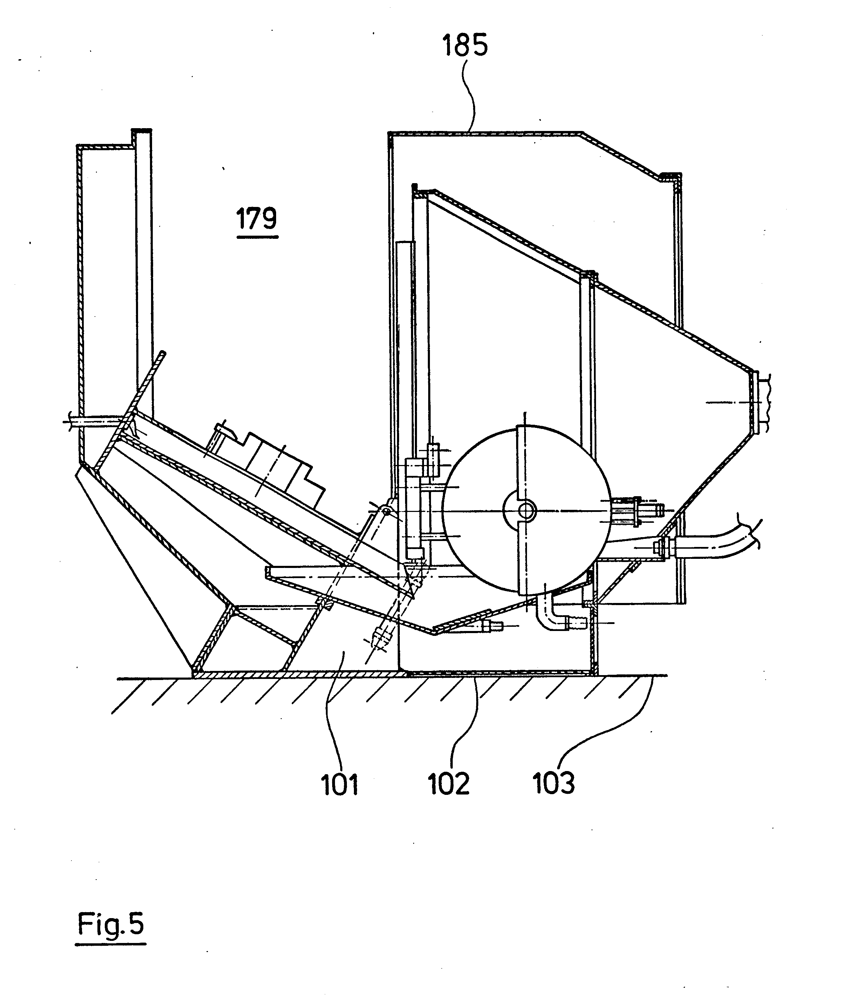

In dem Käfig 182, der aus undurchsichtigem Material besteht,
ist ein Sichtfenster 184 eingelassen. In dem Käfig ist eine sich
auf beiden Seiten und oberhalb der Werkstückaufnahme 140 erstreckende Öffnung 179 vorgesehen, die durch eine Schiebehaube
185 verschließbar ist. Die Schiebehaube 185 ist in Figur 3 in
Schließstellung und in Figur 5 in geöffneter Stellung gezeichnet.

Die Trennvorrichtung ist schwenkbar um eine zur Trennscheibenachse 186 parallele, in unmittelbarer Nähe von der Trennscheibenachse gelegene Achse 187, und zwar aus der in Figur 3 gezeichneten Funktionsstellung in eine in Figur 5 gezeichnete,
hochgeschwenkte Ruhestellung, in der sie den Raum oberhalb des
Werktisches 144 freigibt. Die hochgeschwenkte Trennvorrichtung
findet ebenfalls Platz innerhalb des Käfigs 182. Beim Schwenken
der Trennvorrichtung bewegt sich mit die Nachführung 111 und
die Vorschubführung 105 sowie die Motoren zum Antrieb dieser
Führungen und der Trennscheibe.

Zum Verschwenken der Trennvorrichtung ist ein Hydraulikzylinder
188 vorgesehen.

Patentansprüche:

1. Zerkleinerungsvorrichtung für Werkstücke aus Metall, Beton und dergleichen, harten Materialien zum Trennen mit Hilfe einer umlaufenden Trennscheibe einer motorbetriebenen Trennvorrichtung, bei der an einem Gestell eine Werkstückaufnahme angeordnet ist und darüber eine sich mit ihrer Vorschubachse in Trennschnittrichtung erstreckende Vorschubführung für einen Support gelagert ist und bei der die Trennvorrichtung in einer Nachführung für die Schnittiefe am Support gelagert ist, die mit ihrer Nachführachse gekreuzt zur Vorschubachse orientiert ist, dadurch gekennzeichnet, daß beim Trennen die Vorschubachse ( 21, 121) im Neigungswinkel von 30 bis 60$^{o}$ gegenüber der horizontalen Standfläche (2, 102) des Gestells (1, 101) geneigt ist, daß die Trennscheibe (18, 118) im Trennschnitt abwärts umlaufend angetrieben ist und daß unterhalb der Bahn der Trennscheibe ( 18, 118 ) in abwärtiger Verlängerung des Trennschnittes eine Wasserwanne (25,125) am Gestell (1,101) angeordnet ist, die nach oben offen ist.

2. Vorrichtung nach Anspruch 1, dadurch gekennzeichnet, daß unterhalb der Bahn der trennenden Trennscheibe ( 118 ) eine nach oben offene, auf die Wasserwanne ( 125 ) zu geneigte Rinne ( 155 ) angeordnet ist, in deren oberes, der Wasserwanne abgekehrtes Ende ein Wasserzulauf ( 156 ) mündet.

3. Vorrichtung nach Anspruch 1 oder 2, dadurch gekennzeichnet, daß das Gestell ( 101 ) von einem staubdichten Käfig ( 182 ) umschlossen ist, der eine sich beidseitig von der Werkstückaufnahme ( 140 ) und oberhalb der Werkstückaufnahme erstreckende, durch eine Schiebehaube ( 185 ) verschließbare Öffnung ( 179 ) und einen Staubabzug ( 181 ) aufweist.

0070352
P 41 517

4. Vorrichtung nach einem der vorhergehenden Ansprüche, dadurch gekennzeichnet, daß die Trennvorrichtung ( 104 ) mitsamt ihrer Vorschubführung ( 105 ) an der Nachführung ( 111 ) und ihrem Support ( 110 ) um eine parallel und nahe zur Trennscheibenachse ( 186 ) gelegene Schwenkachse ( 187 ) schwenkbar am Gestell ( 101 ) gelagert ist, aus ihrer Funktionsstellung, die sie beim Trennen einnimmt, in eine hochgeklappte Ruhestellung, in der sie sich noch innerhalb des Käfigs ( 182 ) befindet, aber den Bereich oberhalb der Werkstückaufnahme ( 140 ) freigibt.

5. Vorrichtung nach einem der vorhergehenden Ansprüche, dadurch gekennzeichnet, daß für die Wasserwanne ( 125 ) ein Wasserzulauf ( 157 ) und ein Wasserüberlauf ( 158 ) vorgesehen ist.

6. Vorrichtung nach einem oder mehreren der vorhergehenden Ansprüche, dadurch gekennzeichnet, daß die Vorschubachse (21, 121 ) senkrecht auf der Nachführachse ( 22, 122 ) steht und mit dieser eine, bezogen auf die horizontale Standfläche des Gestells, vertikal orientierte Parallelebene zur Führungsebene für die Mittelebene der Trennscheibe ( 18, 118 ) aufspannt.

7. Vorrichtung nach einem oder mehreren der vorhergehenden Ansprüche, dadurch gekennzeichnet, daß die Werkstückaufnahme ( 40, 140 ) einen Werktisch (47, 144 ) aufweist, der sich mit der gleichen Neigung ( 23, 123 ) wie die Vorschubachse ( 21, 121 ) schräg zur Standfläche ( 2, 102 ) erstreckt.

8. Vorrichtung nach einem der vorhergehenden Ansprüche, gekennzeichnet durch eine Stütze ( 48, 148 ) am abwärtigen Ende der Werkstückaufnahme ( 47, 140 ) für ein auf der Werkstückaufnahme abschüssig liegendes Werkstück ( 51, 151 ), die in Verlängerung des Trennschnittes einen Schlitz ( 49, 50, 154 ) für den Eintritt der Trennscheibe ( 18, 118 ) aufweist.

0070352
P 41 517

9. Vorrichtung nach Anspruch 8, dadurch gekennzeichnet, daß eine Aufnahmeplatte ( 47,          ), die sich mit der Neigung ( 23,  123    ) der Vorschubachse ( 21,  121      ) schräg zur Standfläche ( 2,  102 ) erstreckt, drehbar um eine senkrecht zum Werktisch ( 44,  144 ) gelegene Aufnahmeachse ( 46,      ) an der Werkstückaufnahme ( 40,          ) gelagert ist, die ringsherum einen als Stütze dienenden Stützrand ( 48,          ) aufweist, der mehrere verschiedenen Drehstellungen der Aufnahmeplatte entsprechende Schlitze ( 49, 50 ....          ) für den Eintritt der Trennscheibe ( 18,          ) aufweist.

10. Vorrichtung nach einem der vorhergehenden Ansprüche, dadurch gekennzeichnet, daß die Werkstückaufnahme ( 40,          ) in zwei Gleitschienen ( 30, 31;          ) verschieblich und arretierbar gelagert ist, welche Gleitschienen sich senkrecht zur Führungsebene ( 32,          ) erstreckend, parallel nebeneinander in einer Gleitebene ( 38,          ) angeordnet sind, die sich mit der Neigung ( 23,          ) der Vorschubachse ( 21,          ) schräg zur Standfläche ( 2,          ) erstreckt.

Fig.1

P41517-1/5

Fig.2

Fig. 3

7/5

0070352

Fig.4

Fig.6

185

179

101    102    103

Fig.5